(19) Europäisches Patentamt / European Patent Office / Office européen des brevets

(11) **EP 4 073 536 B1**

(12) **FASCICULE DE BREVET EUROPEEN**

(45) Date de publication et mention de la délivrance du brevet:
**18.10.2023 Bulletin 2023/42**

(21) Numéro de dépôt: **20768640.3**

(22) Date de dépôt: **16.09.2020**

(51) Classification Internationale des Brevets (IPC):
**G01S 5/00** *(2006.01)*    **G01S 5/06** *(2006.01)*
**G01S 1/04** *(2006.01)*    **G01S 5/02** *(2010.01)*

(52) Classification Coopérative des Brevets (CPC):
**G01S 5/06; G01S 5/0009;** G01S 1/045;
G01S 5/0278

(86) Numéro de dépôt international:
**PCT/EP2020/075869**

(87) Numéro de publication internationale:
**WO 2021/115645 (17.06.2021 Gazette 2021/24)**

(54) **PROCÉDÉ DE LOCALISATION PASSIVE D'ÉMETTEURS PAR MESURE DE TEMPS DIFFÉRENTIEL D'ARRIVÉE (TDOA)**

VERFAHREN ZUR PASSIVEN ORTUNG VON SENDERN MITTELS TIME DIFFERENCE OF ARRIVAL (OTDOA)

METHOD FOR PASSIVELY LOCATING TRANSMITTERS BY MEANS OF TIME DIFFERENCE OF ARRIVAL (TDOA)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.12.2019 FR 1914135**

(43) Date de publication de la demande:
**19.10.2022 Bulletin 2022/42**

(73) Titulaire: **THALES**
**92400 Courbevoie (FR)**

(72) Inventeurs:
• **SEUTE, Hugo**
**78851 ELANCOURT Cedex (FR)**
• **RATTON, Laurent**
**78851 ELANCOURT Cedex (FR)**
• **VIGNERON, Anne**
**78851 ELANCOURT Cedex (FR)**
• **BOURDARIAS, Marc**
**78851 ELANCOURT Cedex (FR)**

(74) Mandataire: **Atout PI Laplace**
**Immeuble "Visium"**
**22, avenue Aristide Briand**
**94117 Arcueil Cedex (FR)**

(56) Documents cités:
**CN-A- 109 669 157    US-A- 5 570 099**

• **SAMIR SHALTAF: "Neural-Network-Based Time-Delay Estimation", EURASIP JOURNAL ON APPLIED SIGNAL PROCESSING, vol. 3, 1 janvier 2004 (2004-01-01), pages 378-385, XP055718802,**

**Description**

La présente invention se situe dans le domaine de la localisation passive de sources d'émission radiofréquence. Dans le cas de systèmes radar, ces sources d'émission peuvent aussi bien émettre par intervalles très brefs, par exemple dans le cas de radars aéroportés à HFR (Haute Fréquence de Récurrence) ou bien par périodes très longues, par exemple dans le cas de radars CW (Continuous Waveform).

La localisation passive peut s'effectuer grâce à plusieurs récepteurs distants, en mesurant le temps différentiel d'arrivée du signal (TDOA) sur les récepteurs. Elle est applicable en autoprotection (ESM - Electronic Support Measures) aussi bien qu'en renseignement ELINT (ELectronic INTelligence) et sur tout type de porteurs tels que des satellites, avions ou navire notamment.

Un problème technique à résoudre est celui de la compression des données au sein de chaque récepteur afin de les transmettre par une liaison de données à débit limité au système réalisant la localisation. Cette compression est nécessaire pour obtenir des localisations de précision acceptable tout en respectant les contraintes de débit imposées par la liaison de données. Il existe plusieurs types de solutions au problème de la compression de données pour réaliser une localisation TDOA. On décrit ci-après deux types de solution de l'art antérieur.

<u>Méthodes de type 1</u> : Ces méthodes de compression s'appliquent directement sur les échantillons du signal reçu. On réalise une quantification et un codage de ces échantillons. Cette quantification est optimisée pour dégrader le moins possible l'estimation du TDOA. Ici l'estimation du TDOA est réalisée par intercorrélation des signaux reconstruits. Ces méthodes sont assez génériques et fonctionnent pour tout type de signal. Dans le domaine de la présente invention, on traite des signaux radar, souvent constitués d'impulsions. L'utilisation de tous les échantillons du signal n'est généralement pas nécessaire. D'une part parce que la plupart du temps un émetteur radar n'émet rien, et aussi parce que la nature impulsionnelle de certains signaux radar permet d'obtenir des marqueurs temporels absolus (dates des impulsions) de façon assez précise et peu coûteuse. De plus, l'estimation du TDOA par intercorrélation est très gourmande en ressources de calcul par rapport à une simple soustraction de TOA. Enfin pour certaines applications, des récepteurs existants ne sont pas capables de numériser et traiter tous les échantillons d'un signal radiofréquence en temps réel. Cela conduit au deuxième type de solutions.

<u>Méthodes de type 2</u> : Ces méthodes sont basées sur l'extraction des dates des impulsions. Afin d'obtenir un marqueur temporel, on choisit en général de dater seulement le front montant de l'impulsion. Cette date est appelée TOA (Time Of Arrival) de l'impulsion. Un signal est ainsi caractérisé par la liste des TOAs des impulsions qu'il contient. Ces listes de TOAs sont ensuite échangées entre plateformes, puis les TOAs sont associés entre eux et le TDOA est obtenu par simple soustraction des TDOAs. Cependant, pour les signaux comprenant des impulsions très longues ou bien des signaux CW, il est très difficile voire impossible d'obtenir des TOA d'impulsions. Pourtant ces signaux peuvent contenir d'autres marqueurs temporels, comme des modulations de phase ou de fréquence. Ceux-ci ne sont pas pris en compte par les méthodes de type 2, contrairement aux méthodes de type 1.

Le document CN 109 669 157 A représente l'état de la technique.

Un but de l'invention est de pallier les inconvénients de l'art antérieur. A cet effet, l'invention a pour objet un procédé de localisation passive d'un émetteur d'ondes radar par mesure de différence d'arrivée, dit TDOA, entre deux plateformes d'un signal émis par ledit émetteur, caractérisé en ce que ledit procédé utilise un réseau de neurones global de type siamois composé de deux réseaux de neurones, dit réseau $\alpha$, ayant les mêmes poids et d'un troisième réseau de neurones, dit réseau $\beta$ recevant en entrée les données de sortie desdits réseaux $\alpha$ :

-   un premier réseau $\alpha$ disposé sur une première plateforme, encodant les signaux issus dudit émetteur par un jeu de paramètres et transmettant lesdits paramètres audit réseau $\beta$ ;
-   le deuxième réseau $\alpha$ étant disposé sur la deuxième plateforme, encodant les signaux issus dudit émetteur par un jeu de paramètres et transmettant lesdits paramètres audit réseau $\beta$ ;

ledit réseau $\beta$ étant entraîné à calculer le TDOA à partir desdits paramètres reçus desdits réseaux $\alpha$, ledit réseau global étant entraîné à partir d'un jeu de modèles de signaux susceptibles d'être rencontrés.

Dans un mode de mise en oeuvre particulier, ledit jeu de modèles étant généré à partir d'un ensemble de signaux représentatifs, le processus de génération dudit jeu comporte les étapes suivantes répétées jusqu'à l'obtention d'un nombre donné de modèles :

-   Sélection d'un signal dans ledit ensemble ;

-   Sélection d'une portion dudit signal ;

-   Copie en deux exemplaires de ladite portion ;

- Introduction d'un décalage temporel sur l'une des copies. ;

- Stockage du modèle dans une base de données, ledit modèle étant composé au moins :

  • de ladite copie formant un premier signal apte à être présenté en entrée dudit premier réseau $\alpha$ ;

  • de la copie décalée temporellement formant un deuxième signal apte à être présenté en entrée dudit deuxième réseau $\alpha$ ;

  • dudit décalage temporel, apte à être comparé avec le TDOA calculé par ledit réseau $\beta$ à partir dudit premier signal et dudit deuxième signal.

Pour l'entraînement dudit réseau global, on présente par exemple successivement à chacune des entrées desdits réseaux $\alpha$ le premier et le deuxième signal des modèles dudit jeu, le TDOA calculé par ledit réseau $\beta$ étant comparé avec le décalage temporel associé au modèle en cours, les poids desdits réseaux $\alpha$ et dudit réseau $\beta$ étant ajustés de façon itérative en fonction de l'erreur résultant de chaque comparaison. On obtient par exemple une fonction de coût en prenant l'erreur quadratique entre ledit décalage temporel et le TDOA calculé en sortie dudit réseau $\beta$, ladite fonction de coût étant minimisée par un algorithme de type descente de gradient stochastique, lesdits poids étant ajustés de façon itérative.

Sur chacune desdites plateformes, le signal reçu dudit émetteur est par exemple capté par un récepteur fournissant une description dudit signal sous forme numérique, ladite description étant une suite d'échantillons dudit signal ou une description sous un autre format.

D'autres caractéristiques et avantages de l'invention apparaîtront à l'aide de la description qui suit, faite en regard de dessins annexés qui représentent :

[Fig.1] la figure 1, une illustration du contexte de l'invention présentant deux porteurs aérien en base courte ;

[Fig.2] la figure 2, un système de localisation par TDOA avec centralisation des données sur une station centrale ;

[Fig.3] la figure 3, un système de localisation par TDOA avec centralisation des données sur une des deux plateformes ;

[Fig.4] la figure 4, une représentation schématique des étapes de traitement d'un premier type de méthodes selon l'art antérieur ;

[Fig.5] la figure 5, une représentation schématique des étapes de traitement d'un deuxième type de méthodes selon l'art antérieur ;

[Fig.6] la figure 6, une illustration du de la structure de réseau utilisé par l'invention ;

[Fig.7] la figure 7, un schéma fonctionnel de l'invention ;

[Fig.8] la figure 8, une illustration du processus de génération d'un jeu de données adapté à partir d'une base de signaux ;

[Fig.9] la figure 9, une illustration de la phase d'apprentissage des réseaux de neurones utilisés par l'invention.

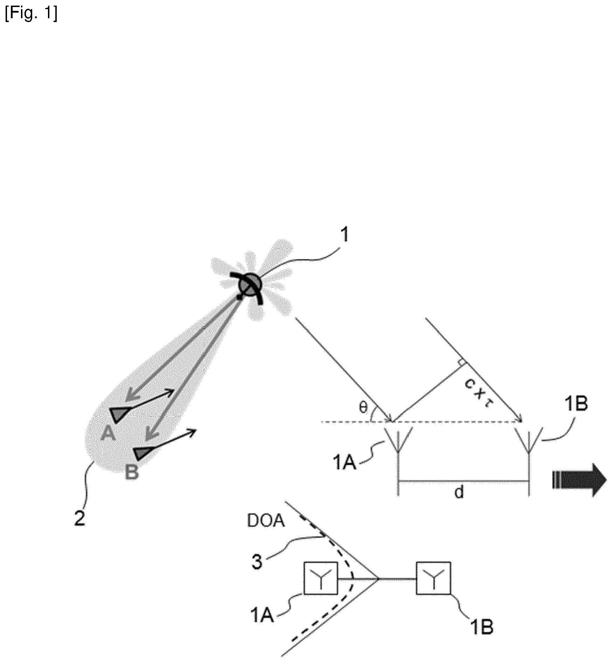

La figure 1 illustre le contexte de l'invention. L'invention s'inscrit dans le domaine de la localisation géographique multi-porteurs par écoute et mesure des temps d'arrivée. Les récepteurs sont supposés former une base assez courte pour être éclairés simultanément par un même lobe d'antenne, comme l'illustre la figure dans un cas aéroporté. Deux porteurs A et B sont espacés d'une distance de l'ordre du kilomètre et sont éclairés simultanément par le lobe principal 2 d'un radar 1 à localiser. Dans la partie supérieure de la figure, les deux récepteurs 1A, 1B associés aux porteurs A et B mesurent la différence de temps d'arrivée du signal (TDOA) noté $\tau$. Par définition, le lieu des points de l'espace correspondant au TDOA $\tau$ est un hyperboloïde dont l'intersection avec un sol plan est une hyperbole 3 représentée en trait discontinu sur la partie inférieure de la figure. Si le radar est à grande distance, l'asymptote de l'hyperbole donne la direction d'arrivée $\theta$ (DOA, Direction Of Arrival) du signal via la relation suivante :

$$\cos \theta = \frac{c\tau}{d} \quad (1)$$

où c est la vitesse de propagation des ondes et d la taille de la base (i.e. la distance entre les récepteurs 1A, 1B). En différentiant la relation ci-dessus, une précision $\sigma_\tau$ sur le TDOA fournit une précision $\sigma_\theta$ sur la direction d'arrivée :

$$\sigma_\theta = \frac{c}{d \sin \theta} \sigma_\tau . \quad (2)$$

Le tableau 1 ci-dessous donne quelques exemples numériques de précision angulaire atteignable avec le TDOA dans une base courte.

[Table 1]

| d | 1000 m | | | 2500 m | | |
|---|---|---|---|---|---|---|
| $\sigma_\tau$ | 50 ns | 40 ns | 10 ns | 50 ns | 10 ns | 2 ns |
| $\sigma_\theta$ | 1° | 0.8° | 0.2° | 0.4° | 0.08° | 0.016° |

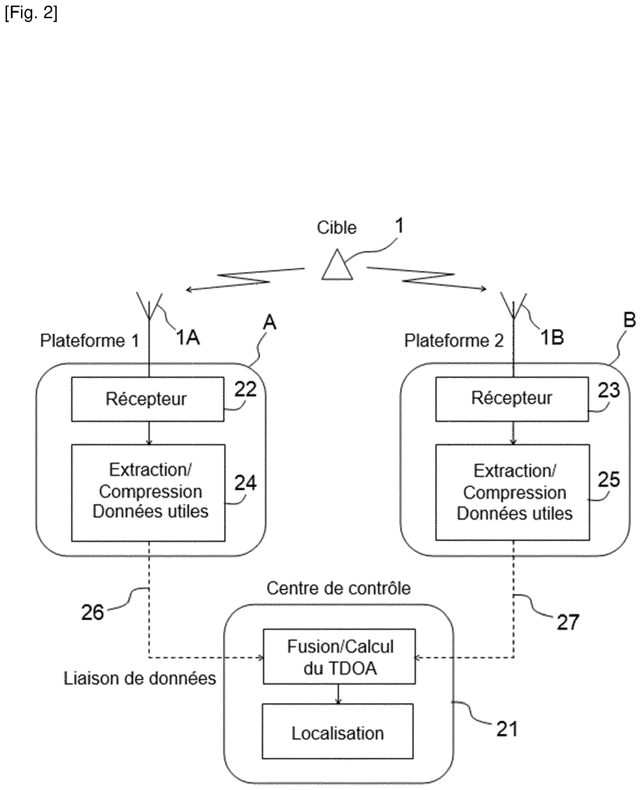

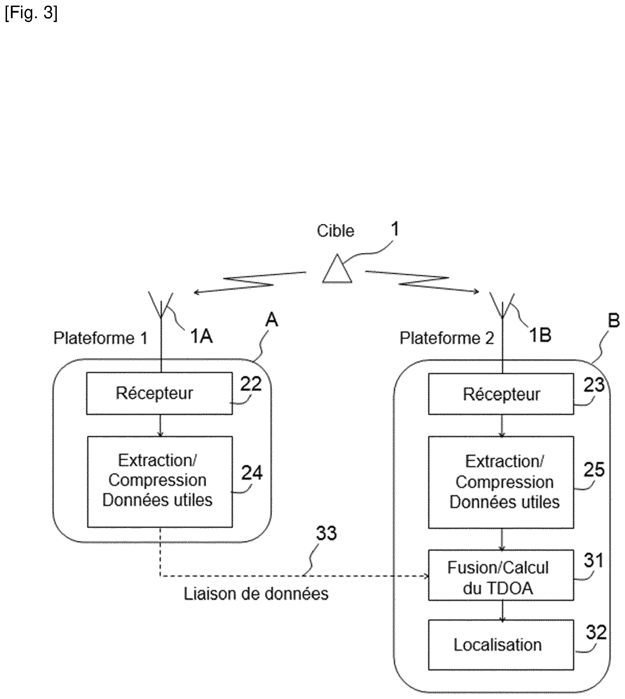

Avant de décrire la solution selon l'invention, on rappelle un des problèmes techniques à résoudre en regard des figures 2 et 3, puis on détaille les deux types de méthodes brièvement présentées en introduction. Afin de réaliser une localisation par TDOA au cours d'une mission, il est nécessaire d'échanger des informations entre plusieurs plateformes distantes. Ceci peut être réalisé dans deux configurations différentes illustrées ;

La figure 2 illustre une première configuration correspondant à un système de localisation par TDOA avec centralisation des données sur une station centrale 21, du type centre de contrôle. Une première plateforme A reçoit le signal de la cible 1 via son système de réception 1A, 22. Une deuxième plateforme B reçoit le signal de la cible 1 vis son système de réception 1B, 23. Chaque plateforme comporte des moyens 24, 25 d'extraction et de compression des données utiles, et de transmission de ces données utiles vers la station centrale 21. Cette dernière fusionne ces données, calcule le TDOA et en déduit la localisation de la cible.

La figure 3 illustre la deuxième configuration correspondant à un système de localisation par TDOA avec centralisation des données sur une des plateformes. Dans ce cas, les deux plateformes comportent toujours les mêmes systèmes de réception du signal ainsi que d'extraction et de compression des données utiles, mais une plateforme 1B comporte les moyens 31 de fusion des données des données et de calcul du TDOA et les moyens de localisation 32.

Dans les deux configurations, afin de réaliser les échanges, il est nécessaire d'établir au moins une liaison de données 26, 27, 33 afin de transmettre des informations représentant des marqueurs temporels reçus sur une plateforme. Ces liaisons peuvent exister par ailleurs mais elles possèdent un débit limité et sont généralement utilisées pour plusieurs usages. Il est donc nécessaire de comprimer les données pour transmettre en un minimum de bits (ou symboles) les informations permettant de localiser par la suite la source d'information.

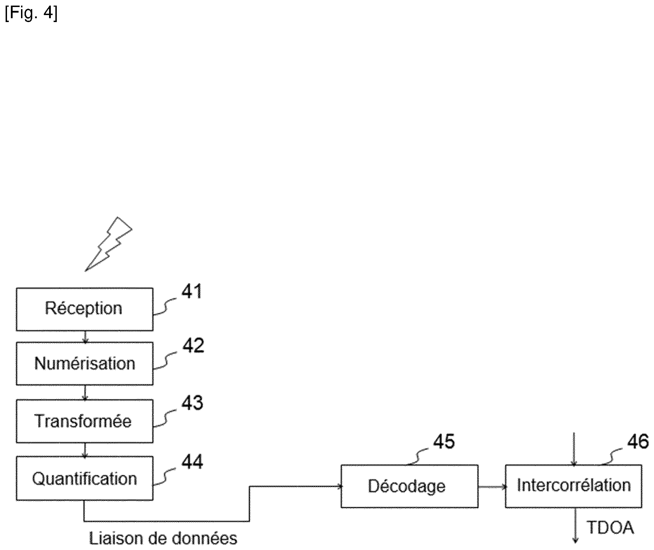

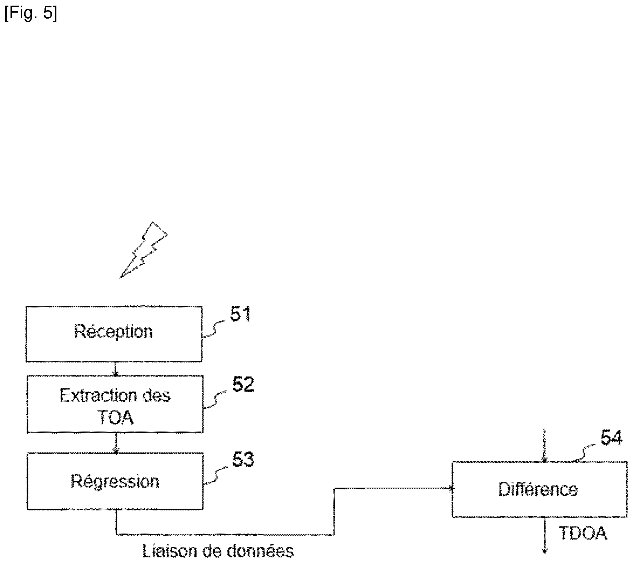

En écoute passive, la localisation de sources par TDOA est une technique d'une grande importance et aux performances prometteuses. Un système basé sur des mesures TDOA est un système multiplateforme complexe. Ces plateformes ont besoin de communiquer entre elles afin d'établir une synchronisation temporelle et de s'échanger des données permettant la localisation [1]. Le volume de données pouvant être important, de nombreuses méthodes ont été développées. On reprend la classification de ces méthodes, établie précédemment en introduction que l'on présente ci-après en regard des figures 4 et 5.

La figure 4 est une représentation schématique des étapes de traitement d'une méthode de type 1. Les méthodes de ce type s'appuient sur le traitement intégral de tous les échantillons du signal numérisé. Elles sont des implémentations différentes d'un même principe illustré par la figure 4.

En premier lieu, le signal est numérisé 42 dès sa réception 41. Dans le domaine d'emploi envisagé, on souhaite avoir une bande d'écoute importante, on a donc un flux de données très important en sortie du convertisseur analogique / numérique. Ensuite, le signal subit généralement une transformée 43 afin de concentrer l'information utile dans un nombre restreint de coefficients. Cela peut être une transformée de Fourier discrète [2], une transformée de Hilbert [3] ou encore une transformée en ondelettes [4]. L'étape finale du processus de compression consiste en la quantification 44 où on vient ne sélectionner qu'un nombre réduit de coefficients de la transformée précédente, et/ou on alloue un nombre défini de bits afin de décrire les coefficients choisis. Cette quantification implique naturellement un compromis entre le volume de données en sortie, et la fidélité aux données d'entrée et donc la précision de l'estimation du TDOA.

Les signaux sont ensuite échangés et décompressés 45. Le calcul du TDOA est réalisé par intercorrélation 46 des échantillons. Ce traitement peut présenter un coût calculatoire prohibitif lorsque le débit d'échantillons est important.

Ces méthodes fonctionnent pour tout type de signal. Elles sont intéressantes lorsqu'il est possible de traiter une version numérique du signal en temps réel, par exemple pour des signaux acoustiques [5]. Pour le cas d'un système d'écoute de signaux radar nécessitant une large bande d'écoute, on travaille généralement à partir des caractéristiques des impulsions reçues (fréquence, largeur d'impulsion, TOA, ...), et non à partir d'une version numérique de l'intégralité du signal. Une caractéristique particulièrement intéressante pour une localisation par TDOA est la mesure de temps d'arrivée (TOA). Cela conduit au second type de méthode, décrit ci-après en regard de la figure 5.

La figure 5 est une représentation schématique des étapes de traitement d'une méthode de type 2. Les méthodes de ce type réalisent la compression directement à partir d'une suite de TOAs conformément au schéma de la figure 5.

Après la réception 51, la première étape 52 est le calcul du temps d'arrivée (TOA) pour chacune des impulsions reçues. On prend en général le front montant comme critère de datation. Il existe plusieurs méthodes permettant d'extraire un TOA robuste au bruit et invariant par rapport au niveau du signal. On peut procéder par seuillage adaptatif [6] ou bien par le calcul du point d'annulation de la dérivée seconde [7]. Ensuite, une étape 53 de régression permet de transformer la liste des TOAs des impulsions en un résumé statistique. Un des coefficients de cette régression correspond à un TOA « moyen ». Cette valeur est estimée avec une bonne précision car elle a été estimée sur la liste complète de TOAs. Ce principe est décrit dans [8] mais est restreint au cas d'une forme d'onde où le TOA des impulsions s'incrémente toujours de la même grandeur, c'est-à-dire une forme d'onde à PRI (Période de Récurrence des Impulsions) constante. Ce même principe est aussi développé dans [9], mais décrit le résumé de mesures d'AOA (Angle of Arrival, angle d'arrivée) et de TDOA, et non le résumé de TOA. Le TDOA est finalement calculé 54 grâce à la simple soustraction de deux TOAs « moyens » obtenus sur les plateformes distantes.

Quel que soit le type de méthode, le TDOA une fois obtenu est envoyé à un algorithme de localisation afin d'estimer la position de l'émetteur. Une méthode différente des méthodes de type 1 et 2 permettant de calculer une différence de temps d'arrivée à partir d'un apprentissage préalable est présentée dans [14]. Toutefois cette méthode n'évoque pas la problématique de compression de données et n'est pas utilisable en tant que telle pour une mesure de TDOA entre plusieurs plateformes distantes.

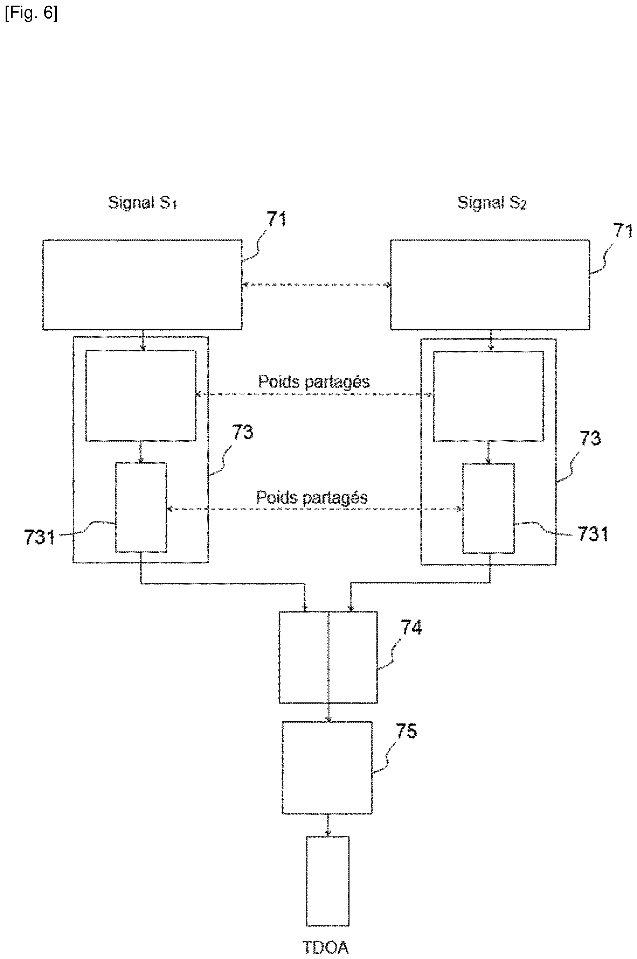

La figure 6 présente la structure d'un réseau de neurones utilisée par l'invention pour le calcul du TDOA, ce réseau étant du type siamois. L'invention exploite le fait que les formes d'onde radar ont le plus souvent un caractère périodique fortement marqué, des impulsions pouvant être émises selon un motif répétitif. L'invention introduit ainsi un algorithme, à base de réseaux de neurones 73, 75, pouvant exploiter le caractère répétitif des signaux reçus pour compresser les données tout en minimisant l'impact de cette compression sur la plateforme de localisation par TDOA. Cet algorithme prend comme entrée un vecteur caractérisant le signal. Ce vecteur peut être la suite temporelle des échantillons de signal $S_1$, $S_2$ acquis sur un récepteur, ou bien toute autre description du signal fournie par le récepteur, par exemple une liste de TOAs.

Le calcul de TDOA tel que réalisé selon l'invention assure une compression des données lors des échanges entre plateformes. On considère qu'une étape préalable de filtrage ou de désentrelacement a permis de séparer les signaux en fonction de leur émetteur d'origine et donc que le signal $S_1$, $S_2$ dont on dispose provient d'un seul et même émetteur. L'invention s'appuie sur un modèle de la forme d'onde radar défini par une base d'exemples qui sera présenté par la suite. Ce modèle n'est donc pas figé. En ajoutant ou retirant des exemples de forme d'onde dans la base, on peut adapter le modèle aux formes d'ondes susceptibles d'être rencontrées sur le terrain. Ainsi on ne se limite pas à une description du signal sous forme de liste de PRI et PRM (Période de Récurrence de Motif).

Cette base d'exemples est utilisée pour entrainer le réseau de neurones de type « réseau siamois » (Siamese neural network) [10-11]. Le principe de ces réseaux est d'apprendre une fonction de similarité entre deux objets présentés en entrée. Traditionnellement, cette fonction de similarité est utilisée pour réaliser une classification binaire, c'est à dire déterminer si les deux objets présentés sont identiques ou non. Selon l'invention, on cherche non pas à apprendre une fonction permettant de différencier deux signaux, mais à apprendre une fonction permettant de calculer le délai entre deux signaux, d'une manière similaire à [14], ce délai étant utilisé pour le calcul du TDOA. L'intérêt de l'utilisation de réseaux type siamois est leur structure divisée en canaux indépendants [11]. De plus, les poids des couches de ces canaux indépendants sont identiques entre les canaux. Ceci permet de réduire le nombre de degrés de liberté du problème (c'est-à-dire le nombre de poids à estimer lors de la phase d'apprentissage).

En jouant sur la taille de la couche 731 en sortie des canaux, il est possible de contraindre le réseau à réduire la taille des données à échanger entre plateformes. Cette approche est similaire à la compression de données par auto-encodeurs [12]. La différence est que la représentation du signal que l'on cherche à obtenir après compression n'est pas une représentation permettant la meilleure reconstruction possible du signal d'entrée, mais une représentation permettant de calculer le plus précisément possible le délai entre deux signaux, ce qui est le but recherché pour le calcul du TDOA.

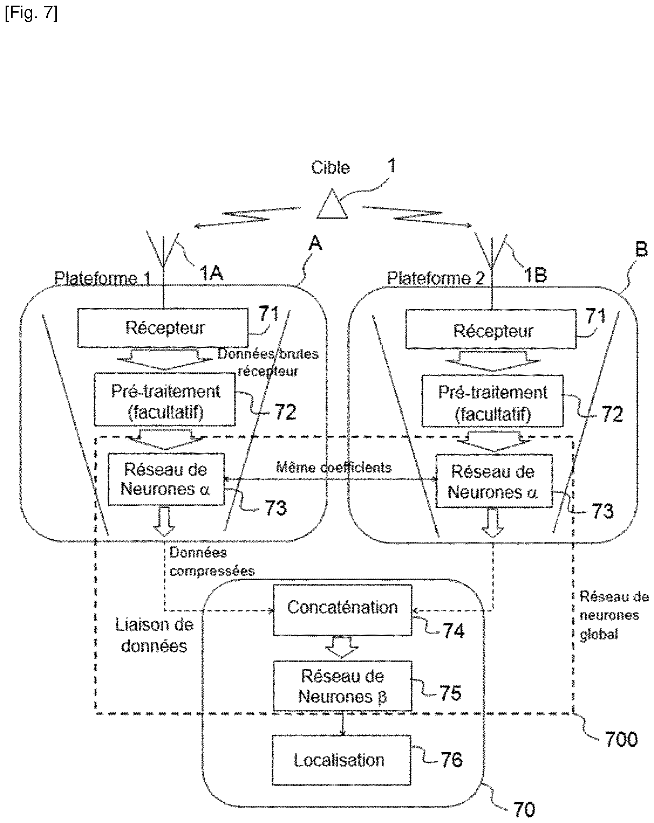

La figure 7 présente l'ensemble des blocs fonctionnels mettant en oeuvre l'invention pour le calcul du TDOA, et par conséquent pour la localisation de cibles. On suppose qu'une étape d'apprentissage a été effectuée préalablement afin que le réseau de neurones soit entraîné à calculer le TDOA. Lors de cette étape d'apprentissage qui sera décrite ultérieurement, basée sur une bibliothèque de modèles de signaux représentatifs, l'algorithme est entraîné à trouver un jeu de paramètres restreint permettant d'encoder de façon efficace des marqueurs temporels des signaux d'entrée, la compression des signaux étant réalisée par cet encodage.

Le système présenté en figure 7 comprend deux plateformes A, B et une station centrale 70, chaque plateforme comporte un réseau de neurones 73. Sur chaque plateforme, une antenne 1A, 1B reçoit le signal émis par la cible 1. Ce signal est traité par un récepteur 71 fournissant une description du signal sous forme numérique. Typiquement, cette description est une suite d'échantillons du signal numérisé, mais il peut s'agir d'une description sous un autre format, par exemple une liste de « Pulse Descriptor Word » (PDW) qui sont des valeurs caractérisant les impulsions du signal reçu (dans le cas d'un signal pulsé) : durée, fréquence et autres caractéristiques des impulsions

Un prétraitement 72 est par exemple appliqué à ces données brutes en sortie du récepteur, afin de réduire le flux de données et/ou d'introduire certains invariants. Ce prétraitement peut être une décimation de signal (réduction du flux de données), ou une normalisation de l'amplitude (introduction d'une invariance en amplitude) notamment. Il est aussi possible de passer directement les données brutes en entrée du réseau de neurones 73.

Sur chaque plateforme, les données sont traitées par un premier réseau de neurones 73, noté $\alpha$, un deuxième réseau de neurones 75, noté $\beta$, étant disposé dans la station centrale 70. Les réseaux de neurones $\alpha$ sont entraînés à encoder (compresser) les signaux reçus par un jeu de paramètres restreints, encodant les marqueurs temporels de ces signaux. Le réseau de neurones $\beta$ est entraîné à décoder cette représentation compressée, c'est-à-dire à utiliser les données encodées pour calculer le TDOA.

Le réseau de neurones $\alpha$ (identique sur les deux plateformes) est constitué d'un ensemble de couches de différents types, notamment les couches classiques employées dans les réseaux de « deep learning » [13]. Dans le cas de données d'entrée sous forme d'échantillons de signal, le réseau $\alpha$ peut faire avantageusement usage de couches de type convolution 1D, permettant d'exploiter la structure temporelle du signal. La taille de la dernière couche du réseau est dimensionnée en fonction du débit disponible de la liaison de données vers la station centrale. Par exemple, si on souhaite pouvoir calculer deux mesures de TDOA par secondes et que la liaison de données permet l'échange de 32 nombres flottants par seconde, il faut alors que la couche de sortie du réseau $\alpha$ soit au maximum de taille 16.

En sortie de chaque réseau $\alpha$, on obtient une représentation compressée du signal reçu sur la plateforme. Les représentations compressées en sortie du réseau $\alpha$ de chaque plateforme sont ensuite transmises sur une même plateforme qui peut être l'une des deux plateformes A, B (voir la figure 3) ou une autre plateforme comme la station centrale 70 dans l'exemple de cette figure 7. Les données provenant des deux plateformes sont concaténées 74 avant d'alimenter le réseau de neurones $\beta$. La concaténation consiste à rassembler dans un même vecteur les données provenant des deux plateformes. Le réseau $\beta$ peut lui aussi comporter plusieurs couches de tailles et de types variables. Sa dernière couche est de taille 1 et fournit en sortie le TDOA final calculé par le système. L'ensemble des réseaux $\alpha$ et du réseau $\beta$ distants les uns des autres forme un réseau neuronal global 700.

La mesure de TDOA obtenue alimente un algorithme de localisation 76, la localisation étant effectuée à partir du TDOA de façon connue. Cette mesure de TDOA peut éventuellement être corrigée d'un offset temporel afin de compenser l'erreur de synchronisation entre les horloges de chaque plateforme. Combinée avec d'autres mesures de TDOA, et en connaissant la trajectoire des plateformes réceptrices A, B, on peut par la suite calculer classiquement une estimation de la position de la cible émettrice.

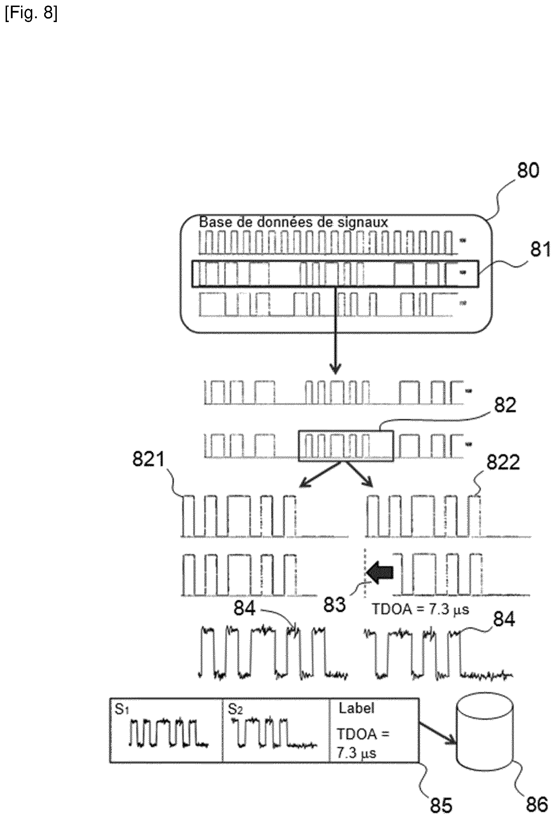

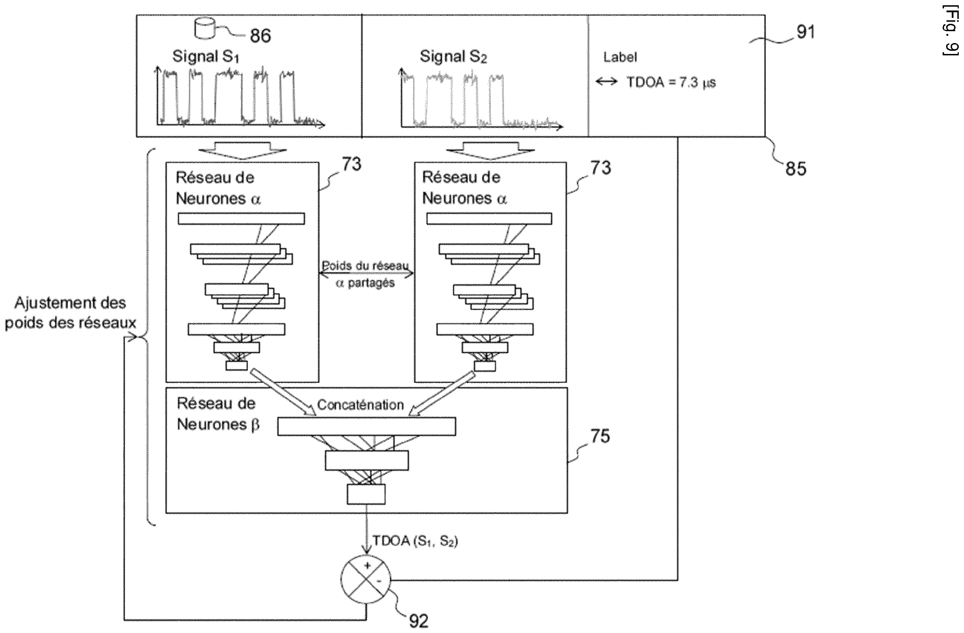

On décrit ci-après la phase d'apprentissage des réseaux de neurones en regard de la figure 8, pour la génération d'un jeu de données, et de la figure 9 pour l'entraînement d'un réseau de neurones. L'apprentissage est effectué sur le réseau global 700 constitué des réseaux $\alpha$ et du réseau $\beta$.

La figure 8 illustre la génération d'un jeu de données adapté à partir d'une base de données de signaux représentatif 80. Cette base de données 80 est en fait une bibliothèque de modèles de signaux susceptibles d'être rencontrés en opération. Afin d'entraîner le réseau de neurones pour réaliser la tâche décrite précédemment en regard de la figure 7, il est nécessaire de posséder un jeu de données comprenant des exemples d'entrées possibles (signaux) et la sortie associée formant un label (valeur du TDOA). Généralement, on ne dispose pas de tels jeux de données. Cependant, il est généralement possible d'avoir accès à des exemples de signaux (enregistrements de signaux réels, ou simulations), typiquement accessibles dans la base de données 80. A partir d'une base de données de signaux différents, il est possible de générer un jeu de données pour l'entraînement d'un réseau de neurones réalisant une estimation du TDOA. La figure 8 illustre des étapes selon l'invention permettant de générer un exemple (entrées et label) pour le jeu de données destiné à l'apprentissage.

Dans une première étape, on sélectionne un signal 81 (aléatoirement) dans la base de données 80. Puis on sélectionne une portion 82 du signal 81, de façon aléatoire.

Dans une étape suivante, on copie cette portion en deux exemplaires 821, 822, et on introduit un décalage temporel 83 sur l'une des copies, cet offset temporel 83 simule un TDOA, égal à 7,3 $\mu$s dans l'exemple de la figure 8. L'offset 83 est choisi de façon aléatoire dans une plage de temps réaliste, compatible des délais rencontrés entre les plateformes.

On ajoute par exemple du bruit 84 ou de la variabilité aux deux copies de signaux. On obtient alors deux signaux $S_1$, $S_2$ et un TDOA associé c'est-à-dire un modèle 85 composé de deux entrées possibles et de la sortie associée (label), destiné à être stocké dans une base de données pour former un jeu de données 86. Le processus illustré par la figure 8 est répété un nombre de fois égal au nombre d'exemples qu'on souhaite stocker dans le jeu de données 86.

Le processus décrit par la figure 8 illustre un exemple où les signaux d'entrée sont décrits sous forme d'une suite d'échantillons, mais le même processus peut être appliqué de façon similaire sur des données ayant d'autres formes, c'est-à-dire structurées différemment, par exemple sur des PDW. Cette méthode de génération de données permet d'obtenir un nombre important d'exemples dans le jeu de données, et cela même si on ne dispose que d'un nombre réduit d'enregistrements de signaux, en raison du fait que les exemples sont créés sur des portions de signaux eux-mêmes pouvant être très longs, et que l'introduction de variabilités de façon aléatoire permet de multiplier les exemples issus du même signal (principe de l'augmentation de données).

La figure 9 illustre la phase d'apprentissage des réseaux de neurones. Cette phase d'apprentissage consiste à déterminer les poids de chaque couche du réseau global 700, constitué des réseaux $\alpha$ et du réseau $\beta$. A cet effet, on présente à chacune des entrées des réseaux $\alpha$ des données 85 issues du jeu de données 86 constitué dans l'étape précédente. Les sorties des couches sont successivement calculées en utilisant les poids courants (initialisés aléatoirement au début). Les poids des réseaux $\alpha$ sont partagés, c'est-à-dire que ces deux réseaux ont les mêmes poids. Les sorties des réseaux $\alpha$ sont concaténées selon processus 74 décrit en regard de la figure 7. Les données concaténées sont entrées dans le réseau $\beta$.

La sortie finale (sortie du réseau $\beta$), censée correspondre au TDOA entre les deux signaux, est comparée 92 avec le TDOA vrai (label 91 de l'exemple d'entrée). On obtient une fonction de coût en prenant par exemple l'erreur quadratique entre le TDOA vrai et le TDOA en sortie du réseau. Cette fonction de coût est par exemple minimisée par un algorithme de type descente de gradient stochastique, les poids des couches étant ajustés de façon itérative [13]. Cette étape d'apprentissage permet de déterminer les poids des réseaux $\alpha$ et du réseau $\beta$ de façon conjointe.

L'invention offre notamment les avantages suivants :

- La compression est potentiellement possible sur tout type de signal ;

- Le procédé selon l'invention ne nécessite pas d'avoir un modèle précis de la forme d'onde ;

- La compression s'appuie sur la base de données 80 des formes d'ondes susceptibles d'être rencontrées en opération ;

- L'invention permet le calcul du TDOA de façon directe, sans étape supplémentaire potentiellement coûteuse, telle que l'association des marqueurs temporels entre eux, ou le calcul de délais par intercorrélation ;

- L'invention utilise potentiellement tout marqueur temporel présent sur le signal, pas seulement les fronts montants d'impulsions ;

- Si l'apprentissage du réseau a été correctement réalisé, la représentation du signal obtenue en sortie de compression est efficace car elle conserve uniquement l'information utile permettant de calculer le paramètre d'intérêt : le TDOA ;

- Enfin, l'invention permet de gérer simplement le débit des données à transmettre entre plateformes, via le pilotage de la taille de la couche de sortie des canaux indépendants.


ANNEXE

[1] Seuté, H., Grandin, J. F., Enderli, C., Khenchaf, A., & Cexus, J. C. (2015, June). Why synchronization is a key issue in modem Electronic Support Measures. In Radar Symposium (IRS), 2015 16th International (pp. 794-799). IEEE.

[2] Fowler, M. L., & Chen, M. (2005). Fisher-inforrnation-based data compression for estimation using two sensors. IEEE Transactions on Aerospace and Etectronic Systems, 41(3), 1131-1137.

[3] DesJardins, G. A. (1996). U.S. Patent No. 5,570,099. Washington, DC: U.S. Patent and Trademark Office.

[4] Chen, M., & Fowler, M. L. (2005, March). Geometry-adaptive data compression for TDOA/FDOA location [wireless sensor network applications]. In Acoustics, Speech, and Signal Processing, 2005. Proceedings.(ICASSP'05). IEEE International Conference on (Vol. 4, pp. iv-1069).IEEE.

[5] Vasudevan, L., Ortega, A., & Mitra, U. (2003, November). Application-specific compression for time delay estimation in sensor networks. In Proceedings of the 1st international conference on Embedded networked sensor systems (pp 243-254). ACM.

[6] Torrieri, D. J. (1977). Adaptive thresholdng systems. IEEE Transactions on Aerospace and Electronic Systems, (3), 273-280.

[7] Ho, K. C., Chan, Y. T., & Inkol, R. J. (1995). Puise arrival time estimation based on puise sample ratios. IEE Proceedings-Radar, Sonar and Navigation, 142(4), 153-157.

[8] Seuté, H., Grandin, J. F., Enderli. Procédé de localisation passive d'un émetteur non mobile, Demande de brevet PCT/EP2015/076227. WO2016083124A1,2015.

[9] Grandin, J. F., Bosser, L., Benvenuti, D., Tengstrand, G., Andersson, V., Hultman, P., ... & Johansson, A. (2011, September). Solving the data-link bottleneck for MPEG location. In Digital Communications-Enhanced Surveillance of Aircraft and Vehicles (TIWDC/ESAV), 2011 Tyrrhenian International Workshop on (pp. 101-106).IEEE.

[10] Bromley, J., Guyon, I., LeCun, Y., Säckinger, E., & Shah, R. (1994). Signature verification using a" siamese" time delay neural network. In Advances in neural information processing systems (pp. 737-744).

[11] Zagoruyko, S., & Komodakis, N. (2015). Learning to compare image patches via convolutional neural networks. In Proceedings of the IEEE conference on computer vision and pattern recognition (pp. 4353-4361).

[12] Yildirim, O., San Tan, R., & Acharya, U. R. (2018). An efficient compression of ECG signals using deep convolutional autoencoders. Cognitive Systems Research, 52, 198-211.

[13] Goodfellow, I., Bengio,Y., & Courville,A. (2016). Deep learning.MIT press.

[14] Shaltaf, S. (2004). Neural-network-based time-delay estimation. EURASIP Journal on Applied Signal Processing, 2004, 378-385.

**Revendications**

1. Procédé de localisation passive d'un émetteur d'ondes radar par mesure de différence d'arrivée, dit TDOA, entre deux plateformes (A, B) d'un signal émis par ledit émetteur, **caractérisé en ce que** ledit procédé utilise un réseau de neurones global (700, 73, 75) de type siamois composé de deux réseaux de neurones, dit réseaux $\alpha$, ayant les mêmes poids et d'un troisième réseau de neurones, dit réseau $\beta$ recevant en entrée les données de sortie desdits réseaux $\alpha$ :

   - un premier réseau $\alpha$ disposé sur une première plateforme, encodant les signaux issus dudit émetteur par un jeu de paramètres et transmettant lesdits paramètres audit réseau $\beta$ ;
   - le deuxième réseau $\alpha$ étant disposé sur la deuxième plateforme, encodant les signaux issus dudit émetteur par un jeu de paramètres et transmettant lesdits paramètres audit réseau $\beta$ ;

   ledit réseau $\beta$ étant entraîné à calculer le TDOA à partir desdits paramètres reçus desdits réseaux $\alpha$, ledit réseau global étant entraîné à partir d'un jeu de modèles de signaux susceptibles d'être rencontrés (86).

2. Procédé selon la revendication 1, **caractérisé en ce que** ledit jeu de modèles étant généré à partir d'un ensemble (80) de signaux représentatifs, le processus de génération dudit jeu comporte les étapes suivantes répétées jusqu'à l'obtention d'un nombre donné de modèles :

   - Sélection d'un signal (81) dans ledit ensemble (80) ;
   - Sélection d'une portion (82) dudit signal ;
   - Copie en deux exemplaires (821, 822) de ladite portion ;
   - Introduction d'un décalage temporel (83) sur l'une des copies. ;
   - Stockage du modèle dans une base de données (86), ledit modèle étant composé au moins :
   - de ladite copie formant un premier signal apte à être présenté en entrée dudit premier réseau $\alpha$ ;

- de la copie décalée temporellement formant un deuxième signal apte à être présenté en entrée dudit deuxième réseau α ;
- dudit décalage temporel (83), apte à être comparé avec le TDOA calculé par ledit réseau β à partir dudit premier signal et dudit deuxième signal.

3. Procédé selon la revendication 2, **caractérisé en ce que** du bruit ou des variabilités (84) sont ajoutés sur lesdites copies.

4. Procédé selon l'une quelconque des revendications 2 ou 3, **caractérisé en ce que** lesdites sélections sont aléatoires.

5. Procédé selon l'une quelconque des revendications 2 à 4, **caractérisé en ce que** le décalage temporel est choisi de façon aléatoire.

6. Procédé selon l'une quelconque des revendications 2 à 5, **caractérisé en ce que** pour l'entraînement dudit réseau global (73, 75), on présente successivement à chacune des entrées desdits réseaux α le premier et le deuxième signal des modèles dudit jeu (86), le TDOA calculé par ledit réseau β étant comparé (92) avec le décalage temporel associé au modèle en cours, les poids desdits réseaux α et dudit réseau β étant ajustés de façon itérative en fonction de l'erreur résultant de chaque comparaison.

7. Procédé selon la revendication 6, **caractérisé en ce qu'**on obtient une fonction de coût en prenant l'erreur quadratique entre ledit décalage temporel (83) et le TDOA calculé en sortie dudit réseau β, ladite fonction de coût étant minimisée par un algorithme de type descente de gradient stochastique, lesdits poids étant ajustés de façon itérative.

8. Procédé selon l'une quelconque des revendications précédentes, **caractérisé en ce que** sur chacune desdites plateformes (A, B), le signal reçu dudit émetteur est capté par un récepteur (71) fournissant une description dudit signal sous forme numérique, ladite description étant une suite d'échantillons dudit signal ou une description sous un autre format.

9. Procédé selon la revendication 1, **caractérisé en ce que** ledit réseau β est disposé sur l'une desdites deux plateformes.

10. Procédé selon la revendication 1, **caractérisé en ce que** ledit réseau β est disposé sur une troisième plateforme.

**Patentansprüche**

1. Verfahren zum passiven Orten eines Radarwellensenders durch Messen einer Ankunftsdifferenz, TDOA genannt, zwischen zwei Plattformen (A, B) eines von dem Sender gesendeten Signals, **dadurch gekennzeichnet, dass** das Verfahren ein globales neuronales Netz (700, 73, 75) vom siamesischen Typ verwendet, das zusammengesetzt ist aus zwei neuronalen Netzen, α-Netze genannt, mit denselben Gewichtungen, und einem dritten neuronalen Netz, β-Netz genannt, das als Eingabe die Ausgabedaten der α-Netze empfängt:

- ein erstes α-Netz, das auf einer ersten Plattform angeordnet ist, wobei es die Signale vom Sender durch einen Satz von Parametern codiert und die Parameter zum β-Netz überträgt;
- das zweite α-Netz, das auf der zweiten Plattform angeordnet ist, das die Signale vom Sender durch einen Satz von Parametern codiert und die Parameter zum β-Netz überträgt;

wobei das β-Netz zum Berechnen der TDOA anhand der von den α-Netzen empfangenen Parameter trainiert wird, wobei das globale Netz anhand eines Satzes von Signalmodellen trainiert wird, die wahrscheinlich angetroffen werden können (86).

2. Verfahren nach Anspruch 1, **dadurch gekennzeichnet, dass**, da der Satz von Modellen anhand einer Gruppe (80) von repräsentativen Signalen erzeugt wird, der Prozess des Erzeugens des Satzes die folgenden Schritte aufweist, die wiederholt werden, bis eine gegebene Anzahl von Modellen erreicht ist:

- Auswählen eines Signals (81) aus der Gruppe (80);
- Auswählen eines Teils (82) des Signals;
- Kopieren des Teils in zwei Exemplaren (821, 822);

- Einführen einer zeitlichen Verschiebung (83) in eine der Kopien;
- Speichern des Modells in einer Datenbank (86), wobei das Modell mindestens aus Folgendem zusammengesetzt ist:
- der Kopie, die ein erstes Signal bildet, das als Eingabe für das erste α-Netz präsentiert werden kann;
- der zeitlich verschobenen Kopie, die ein zweites Signal bildet, das als Eingabe für das zweite α-Netz präsentiert werden kann;
- der zeitlichen Verschiebung (83), die mit der vom β-Netz anhand des ersten Signals und des zweiten Signals berechneten TDOA verglichen werden kann.

3. Verfahren nach Anspruch 2, **dadurch gekennzeichnet, dass** den Kopien Rauschen oder Variabilitäten (84) hinzugefügt wird/werden.

4. Verfahren nach Anspruch 2 oder 3, **dadurch gekennzeichnet, dass** die Auswahlen zufällig sind.

5. Verfahren nach einem der Ansprüche 2 bis 4, **dadurch gekennzeichnet, dass** die zeitliche Verschiebung zufällig ausgewählt wird.

6. Verfahren nach einem der Ansprüche 2 bis 5, **dadurch gekennzeichnet, dass** zum Trainieren des globalen Netzes (73, 75) jeder der Eingaben der α-Netze nacheinander das erste und das zweite Signal der Modelle des Satzes (86) präsentiert werden, wobei die vom β-Netz berechnete TDOA mit der dem aktuellen Modell zugeordneten zeitlichen Verschiebung verglichen wird (92), wobei die Gewichtungen der α-Netze und des β-Netzes iterativ in Abhängigkeit von dem aus jedem Vergleich resultierenden Fehler angepasst werden.

7. Verfahren nach Anspruch 6, **dadurch gekennzeichnet, dass** eine Kostenfunktion erhalten wird, indem der quadratische Fehler zwischen der zeitlichen Verschiebung (83) und der am Ausgang des β-Netzes berechneten TDOA genommen wird, wobei die Kostenfunktion durch einen Algorithmus vom Typ stochastischer Gradientenabstieg minimiert wird, wobei die Gewichtungen iterativ angepasst werden.

8. Verfahren nach einem der vorhergehenden Ansprüche, **dadurch gekennzeichnet, dass** auf jeder der Plattformen (A, B) das vom Sender empfangene Signal von einem Empfänger (71) erfasst wird, der eine Beschreibung des Signals in digitaler Form bereitstellt, wobei die Beschreibung eine Folge von Abtastungen des Signals oder eine Beschreibung in einem anderen Format ist.

9. Verfahren nach Anspruch 1, **dadurch gekennzeichnet, dass** das β-Netz auf einer der beiden Plattformen angeordnet ist.

10. Verfahren nach Anspruch 1, **dadurch gekennzeichnet, dass** das β-Netz auf einer dritten Plattform angeordnet ist.

**Claims**

1. A method for passively locating a radar wave emitter by measuring a difference of arrival, called TDOA, between two platforms (A, B) of a signal emitted by said emitter, **characterised in that** said method uses a global neural network (700, 73, 75) of the Siamese type made up of two neural networks, called α networks, having the same weights, and of a third neural network, called β network, receiving as input the output data of said α networks:

- a first α network, arranged on a first platform, encoding the signals originating from said emitter through a set of parameters and transmitting said parameters to said β network;
- the second α network being arranged on the second platform, encoding the signals originating from said transmitter through a set of parameters and transmitting said parameters to said β network;

said β network being trained to compute the TDOA from said parameters received from said α networks, said global network being trained from a set of models of signals that are likely to be encountered (86).

2. The method according to claim 1, **characterised in that**, said set of models being generated from a group (80) of representative signals, the process of generating said set contains the following steps repeated until a given number of models is acquired:

- selecting a signal (81) from said group (80);
- selecting a portion (82) of said signal;
- making two copies (821, 822) of said portion;
- introducing a time-shift (83) on one of the copies;
- storing the model in a database (86), said model being made up of at least:
- said copy forming a first signal capable of being presented as input for said first $\alpha$ network;
- the time-shifted copy forming a second signal capable of being presented as input for said second $\alpha$ network;
- said time-shift (83), capable of being compared with the TDOA computed by said $\beta$ network from said first signal and said second signal.

3. The method according to claim 2, **characterised in that** noise or variability (84) is added to said copies.

4. The method according to any one of claims 2 or 3, **characterised in that** said selections are random.

5. The method according to any one of claims 2 to 4, **characterised in that** the time-shift is randomly selected.

6. The method according to any one of claims 2 to 5, **characterised in that**, in order to train said global network (73, 75), the first and the second signal of the models of said set (86) are successively presented to each of the inputs of said $\alpha$ networks, with the TDOA computed by said $\beta$ network being compared (92) with the time-shift associated with the current model, with the weights of said $\alpha$ networks and of said $\beta$ network being iteratively adjusted as a function of the error resulting from each comparison.

7. The method according to claim 6, **characterised in that** a cost function is acquired by taking the squared error between said time-shift (83) and the TDOA computed at the output of said $\beta$ network, with said cost function being minimised by a stochastic gradient descent type algorithm, with said weights being iteratively adjusted.

8. The method according to any one of the preceding claims, **characterised in that**, on each of said platforms (A, B), the signal received from said emitter is picked up by a receiver (71) providing a description of said signal in digital form, with said description being a series of samples of said signal or a description in another format.

9. The method according to claim 1, **characterised in that** said $\beta$ network is arranged on one of said two platforms.

10. The method according to claim 1, **characterised in that** said $\beta$ network is arranged on a third platform.

[Fig. 1]

[Fig. 2]

Cible  1

Plateforme 1  1A  A

Récepteur  22

Extraction/
Compression
Données utiles  24

26

Plateforme 2  1B  B

Récepteur  23

Extraction/
Compression
Données utiles  25

27

Centre de contrôle

Liaison de données

Fusion/Calcul
du TDOA

Localisation  21

[Fig. 3]

Cible 1

Plateforme 1 1A A          Plateforme 2 1B B

| Récepteur | 22 |

| Extraction/ Compression Données utiles | 24 |

| Récepteur | 23 |

| Extraction/ Compression Données utiles | 25 |

| Fusion/Calcul du TDOA | 31 |

| Localisation | 32 |

33

Liaison de données

[Fig. 4]

| Réception | 41 |
| Numérisation | 42 |
| Transformée | 43 |
| Quantification | 44 |

Liaison de données

| Décodage | 45 |
| Intercorrélation | 46 |

TDOA

[Fig. 5]

[Fig. 6]

Signal S₁          71                Signal S₂          71

Poids partagés

73                                   73

Poids partagés

731                                                     731

74

75

TDOA

[Fig. 7]

[Fig. 8]

[Fig. 9]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 109669157 A
- US 5570099 A, DesJardins, G. A.
- EP 2015076227 W, Seuté, H., Grandin, J. F., Enderli
- WO 2016083124 A1

**Littérature non-brevet citée dans la description**

- Why synchronization is a key issue in modem Electronic Support Measures. **SEUTÉ, H. ; GRANDIN, J. F. ; ENDERLI, C. ; KHENCHAF, A. ; CEXUS, J. C.** In Radar Symposium (IRS), 2015 16th International. IEEE, Juin 2015, 794-799
- **FOWLER, M. L. ; CHEN, M.** Fisher-inforrnation-based data compression for estimation using two sensors. *IEEE Transactions on Aerospace and Etectronic Systems,* 2005, vol. 41 (3), 1131-1137
- Geometry-adaptive data compression for TDOA/FDOA location [wireless sensor network applications]. In Acoustics,. **CHEN, M. ; FOWLER, M. L.** Speech, and Signal Processing, 2005. Proceedings.(ICASSP'05). IEEE International Conference on. IEEE, Mars 2005, vol. 4, iv-1069
- Application-specific compression for time delay estimation in sensor networks. **VASUDEVAN, L. ; ORTEGA, A. ; MITRA, U.** Proceedings of the 1st international conference on Embedded networked sensor systems. ACM, Novembre 2003, 243-254
- **TORRIERI, D. J.** Adaptive thresholdng systems. *IEEE Transactions on Aerospace and Electronic Systems,* 1977, vol. 3, 273-280
- **HO, K. C. ; CHAN, Y. T. ; INKOL, R. J.** Puise arrival time estimation based on puise sample ratios. *IEE Proceedings-Radar, Sonar and Navigation,* 1995, vol. 142 (4), 153-157
- Solving the data-link bottleneck for MPEG location. **GRANDIN, J. F. ; BOSSER, L. ; BENVENUTI, D. ; TENGSTRAND, G. ; ANDERSSON, V. ; HULTMAN, P. ; JOHANSSON, A.** Digital Communications-Enhanced Surveillance of Aircraft and Vehicles (TIWDC/ESAV), 2011 Tyrrhenian International Workshop on. IEEE, Septembre 2011, 101-106
- **BROMLEY, J. ; GUYON, I. ; LECUN, Y. ; SÄCKINGER, E. ; SHAH, R.** Signature verification using a'' siamese'' time delay neural network. *Advances in neural information processing systems,* 1994, 737-744
- **ZAGORUYKO, S. ; KOMODAKIS, N.** Learning to compare image patches via convolutional neural networks. *Proceedings of the IEEE conference on computer vision and pattern recognition,* 2015, 4353-4361
- **YILDIRIM, O. ; SAN TAN, R. ; ACHARYA, U. R.** An efficient compression of ECG signals using deep convolutional autoencoders. *Cognitive Systems Research,* 2018, vol. 52, 198-211
- **GOODFELLOW, I. ; BENGIO, Y. ; COURVILLE, A.** Deep learning. MIT press, 2016
- **SHALTAF, S.** Neural-network-based time-delay estimation. *EURASIP Journal on Applied Signal Processing,* 2004, vol. 2004, 378-385